# EUROPEAN PATENT APPLICATION

(11) **EP 2 465 722 A1**
(43) Date of publication of application: **20.06.2012**
(21) Application number: 10808114.2
(22) Date of filing: 18.07.2010
(51) Int. Cl.: B60N 2/42

(54) **VEHICLE SEAT**

(30) Priority: 13.08.2009 JP 2009187895
(71) Applicant: Delta Tooling Co., Ltd., Hiroshima-shi Hiroshima 736-0084 (JP)
(72) Inventor: FUJITA Etsunori, Hiroshima-shi Hiroshima 736-0084 (JP); MIZUNO Hirofumi, Hiroshima-shi Hiroshima 736-0084 (JP); TAKATA Yasuhide, Hiroshima-shi Hiroshima 736-0084 (JP)
(74) Representative: HOFFMANN EITLE
(86) International application number: PCT/JP2010/062129
(87) International publication number: WO 2011/018930

(57) **Abstract**

Weight reduction is promoted and impact absorbing properties are improved. An intermediate leg portion 403 is provided between a front leg portion 401 and a rear leg portion 402, one of end portions of the rear leg portion 402 is connected to the intermediate leg portion 403 and provided diagonally, a connecting frame 404 formed by connecting two short frames to each other is provided between a lower end portion of the front leg portion 401 and a lower end portion of the rear leg portion 402, and the opposing end portions of the two short frames in this connecting frame 404 and a lower end portion of the intermediate leg portion 403 are connected. If impact energy larger than a predetermined level is applied, a couple force acts in a direction where a connection portion between the opposing end portions of the two short frames in the connecting frame 404 and the lower end portion of the intermediate leg portion 403 is pressed downward, and this rotates the diagonally provided rear leg portion 402 diagonally lower front around the lower end portion thereof. The impact absorbing efficiency is improved by these actions.

## Description

### Technical Field

The present invention relates to a vehicle seat for an aircraft, a train, a boat, a bus and the like and particularly to a vehicle seat suitable for an aircraft seat.

### Background Art

An impact larger than a certain level might be applied to a vehicle seat installed in a cabin of an aircraft at times such as belly-landing or the like, for example. Patent Literatures 1 and 2 disclose a leg structure of a seat that can respond such large impact energy. This leg structure is configured by having a front leg portion and a rear leg portion fixed at lower ends to a rail laid on a floor by a fixed stud. The front leg portion is provided extending substantially vertically upward from the floor surface, while the rear leg portion has a shape extending straight upward diagonally forward from the lower end portion side to the middle and warping rearward in the shape of a bow from the middle to the upper end portion. As illustrated in Fig. 3 of Patent Literature 1, if a force acts in a direction in which a person jumps forward by an impact larger than a certain level, the upper end portion of the front leg portion is deflected forward and the portion warped rearward in the shape of a bow of the rear leg portion is deformed in a direction to stretch forward, and thus, the impact energy is absorbed by plastic deformation at that time.

Moreover, an impact energy absorbing member made of a connected body of two or more plate-shaped members is extended diagonally between the upper end portion of the front leg portion and the portion extending diagonally straight of the rear leg portion. Each of the plate-shaped members is engaged by a bolt and a long hole, for example, and has a function in which, if each of the plate-shaped members is mutually telescopically moved upon receipt of the impact, the bolt expands and deforms the long hole, whereby the impact energy is absorbed.

### Prior Art Literatures

### Patent Literatures

Patent Document 1: Japanese Unexamined Patent Application Publication No. H7-257491
Patent Document 2: Japanese Unexamined Patent Application Publication No. 2006-240379

### Summary of Invention

### Technical Problem

In the case of the above-described leg structure, if an impact load is received, the structure rotates forward around the fixed stud of the lower end portion of the front leg portion, whereby forward plastic deformation is generated in the front leg portion and the rear leg portion. That is, this structure pays attention only to buffering of the impact energy acting forward by plastic deformation. Therefore, in order to further improve the buffering force by plastic deformation, an impact energy absorbing member or the like made of a connected body of plate-shaped members needs to be provided supplementarily, which makes the structure complicated. In recent years, in order to reduce weight of an airframe and a car body from the viewpoint of improvement in fuel efficiency, expectations for weight reduction of a seat to be installed therein has been raised, and a simple structure of a seat is in demand.

The present invention was made in view of the above circumstances and has an object to provide a vehicle seat that can exert a higher level of buffering function to the impact energy and can have the simpler and more light-weighted structure.

### Solution to Problem

In order to solve the above problems, a vehicle seat of the present invention comprises a cushion frame and leg structures provided on the right and left of the cushion frame, in which the leg structures are mounted on a mounting rail laid with a predetermined interval on a floor of a body of a vehicle, **characterized in that**, at least one of the leg structures has a front leg portion connected at a predetermined position of the mounting rail through a front-side fixing member, a rear leg portion provided with a predetermined interval from the front leg portion and connected to the mounting rail through a rear-side fixing member, and an intermediate leg portion provided between the front leg portion and the rear leg portion, the rear leg portion is diagonally connected between the rear-side fixing member and the intermediate leg portion so that an end portion on the intermediate leg portion side is located above an end portion on the rear-side fixing member side, and lower end portions of the front leg portion and the intermediate leg portion, and lower end portions of the rear leg portion and the intermediate leg portion, are connected by first and second connecting frames, respectively .

The front leg portion is provided on the front edge side of the cushion frame so as to extend in a substantially perpendicular direction from the floor surface, the front leg portion, the intermediate leg portion, the cushion frame, and the first connecting frame can be provided so as to form a square shape, and the rear leg portion, the intermediate leg portion, and the second connecting frame form a truss. Moreover, the front leg portion can be provided on the front edge side of the cushion frame so as to extend in the substantially perpendicular direction from the floor surface, and a reinforcing frame is extended between middle parts of the front leg portion and the intermediate leg portion located below the cushion frame, while the front leg portion, the intermediate leg portion, the reinforcing frame, and the first connecting frame form a square shape, and the rear leg portion, the intermediate leg portion, and the second connecting frame form a truss. The front leg portion is provided on the front edge side of the cushion frame so as to extend in the substantially perpendicular direction from the floor surface, and the intermediate leg portion is preferably provided diagonally between the rear edge side of the cushion frame and the first and second connecting frames so that an upper end portion is located on the rear side more than a lower end portion. The front leg portion and the front-side fixing member, the rear leg portion and the rear-side fixing member, the intermediate leg portion and the rear leg portion, the intermediate leg portion and the first and second connecting frames, the first connecting frame and the front leg portion, and the second connecting frame and the rear leg portion are preferably connected to each other by bolts or caulking, respectively. The intermediate leg portion constituting the leg structure extends to above a connection point with the cushion frame and the portion extending upward is preferably a side frame of a back frame.

The cushion frame preferably has a front edge frame and a rear edge frame front edge frame provided in the front-and-rear direction with a predetermined interval and having lengths which can set a plurality of adjacent seats, a side frame extended between the front edge frame and the rear edge frame and composed of a side frame provided closer to the adjacent seat in each seat and a side frame formed of an inner frame arranged inside the intermediate leg portion and an outer frame arranged outside sandwiching the intermediate leg portion of the leg structure between them.

The connection point between the cushion frame and the leg structure is preferably connected by bolts or caulking. The front edge frame of the cushion frame and the front leg portion of the leg structure and the rear edge frame of the cushion frame and the intermediate leg portion of the leg structure are preferably connected by bolts or caulking, respectively. It is preferable that a torsion bar arranged in the right-and-left direction is provided on the front edge side of the cushion frame, a pair of arm members protruding in a direction substantially orthogonal to this torsion bar are provided with a predetermined interval from each other, and a support frame is extended between the arm members.

Members with different Young's modulus are preferably used for the front edge frame and the rear frame of the cushion frame, and the member with Young's modulus higher than that of the front edge frame is preferably used for the rear edge frame. The back frame preferably has a natural frequency in the front-and-rear direction higher than the natural frequency in the right-and-left direction.

Moreover, a covering member having an inner buffer member covering at least a front face side of the front leg portion constituting the leg portion, outer side faces of the front leg portion, the intermediate leg portion, and the rear leg portion, and a back face side of the rear leg portion and an outer covering member covering the inner buffer member and fixed are preferably further provided. Moreover, the vehicle seat of the present invention is preferably used as a seat for a passenger of the vehicle.

### Advantageous Effects of Invention

The vehicle seat of the present invention is configured such that at least one of the leg structures provided on the right and left has the intermediate leg portion between the front leg portion and the rear leg portion, one end portion of the rear leg portion is connected to the intermediate portion and provided diagonally, and moreover, the first and second connecting frames are provided between the lower end portion of the front leg portion and the lower end portion of the rear leg portion, and the opposing end portions in the first and second connecting frames and the lower end portion of the intermediate leg portion are connected to each other.

Therefore, if the impact energy larger than a certain level is given and a force acts diagonally upper front and diagonally lower front around a belt anchor, a couple of force acts in a direction to push down the connection portion between the opposing end portions of each connecting frame and the lower end portion of the intermediate leg portion and rotates the diagonally provided rear leg portion diagonally lower front around the lower end portion thereof. With this displacement of the intermediate leg portion and the rear leg portion, the front leg portion is also displaced forward around the lower end portion thereof. That is, the present invention is configured such that the couple of force acts at plural points including the connection portions between the intermediate leg portion and each connecting frame and the lower end portion of the front leg portion against the force which the impact involves.

Therefore, since the impact can be absorbed not only by forward displacement as before but also by displacement diagonally lower forward and the like around the lower end portion of the rear leg portion, the impact absorbing efficiency is improved. Moreover, since the rear leg portion is displaced downward, forward movement of the human buttocks when the impact energy is given is alleviated, and stability at the position is improved.

Moreover, the vehicle seat of the present invention has a multi-joint structure provided with many connection points including those between the front leg portion and the front-side fixing member, between the rear leg portion and the rear-side fixing member, between the intermediate leg portion and the rear leg portion, between the intermediate leg portion and each connecting frame, between the first connecting frame and the front leg portion, and between the second connecting frame and the rear leg portion by providing the intermediate leg portion. Therefore, the impact energy is dispersed not only by the plastic deformation of the front leg portion, and the rear leg portion but also by the frictional force at each connection point and the couple of force which a rotary motion in each connection point involves. Thus, there is no need to provide a separate impact energy absorbing member as before but can exert a nigh level of impact absorbing capability with a simple and light-weighted configuration. Moreover, by setting different Young's modulus for the front edge frame and the rear edge frame constituting the cushion frame and particularly by making the Young's modulus of the front edge frame lower than that of the rear edge frame, the above-described deformation (front-and-rear, right-and-left, vertical) in the front leg portion side can occur smoothly.

### Brief Description of Drawings

Fig. 1 is a perspective view illustrating an appearance of a vehicle seat according to an embodiment of the present invention when seen from a direction of an aisle side seat.
Fig. 2 is a perspective view illustrating the appearance of the vehicle seat according to the embodiment when seen from a direction of a window side seat.
Fig. 3 is a front perspective view illustrating a frame structure from which is removed each cushioning member of a seat cushion and a seat back from the vehicle seat according to the embodiment.
Fig. 4 is a back perspective view of a frame structure in Fig. 3.
Fig. 5 is a front view of Fig. 3.
Fig. 6 is a plan view of Fig. 3.
Fig. 7 is a side view of Fig. 3 when seen from the aisle side seat direction.
Fig. 8A is an A-A line sectional view of Fig. 7 and Fig. 8B is a view on arrow B of Fig. 7.
Fig. 9 is a side view of Fig. 3 when seen from the window side seat direction.
Fig. 10 is a view for explaining an action when an impact larger than a predetermined level is received in a vehicle seat according to the embodiment.
Fig. 11 is a view illustrating a portion of a leg structure in Fig. 10 in an enlarged manner.
Fig. 12 is a view illustrating a portion close to the center of a rear edge frame in Fig. 10 in an enlarged manner.
Fig. 13 is a view seen from a side face for explaining an action of the leg structure.
Fig. 14 is a view for explaining an action of a vehicle sheet in which the shape of a rear leg portion is different.
Fig. 15 is a view illustrating a frame structure of the vehicle seat according to another embodiment of the present invention.
Fig. 16 is an exploded perspective view of the frame structure of the vehicle seat according to the above-described another embodiment.
Fig. 17 is a view illustrating a structure of a leg portion of the vehicle seat according to the above-described another embodiment.
Fig. 18 is a view for explaining a configuration of a covering member attached to the leg portion of the vehicle seat according to the above-described another embodiment.
Figs. 19A to 19D are views for explaining a fixing method of a front-side fixing member, a front leg portion, and a luggage bar.
Figs. 20A to 20C are views for explaining the fixing method of an end portion on the side opposite to Fig. 19 in the luggage bar.
Figs. 21A to 21C are views for explaining the fixing method of a rear-side fixing member and a rear leg portion.

### Description of Embodiments

The present invention will be described below in more detail on the basis of embodiments illustrated in the attached drawings.

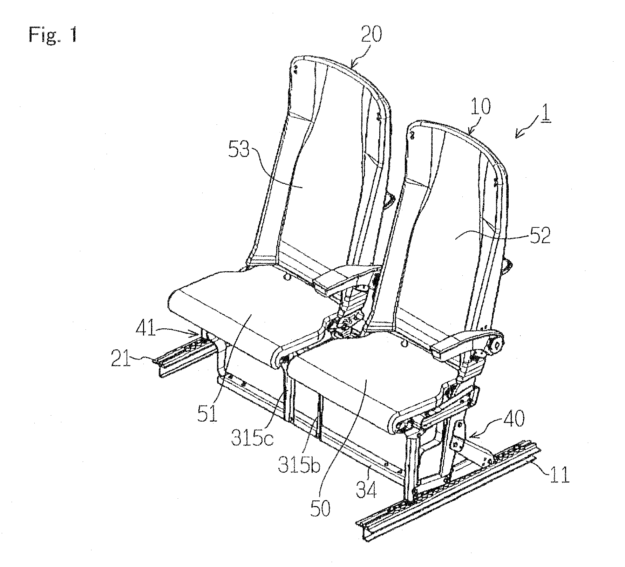

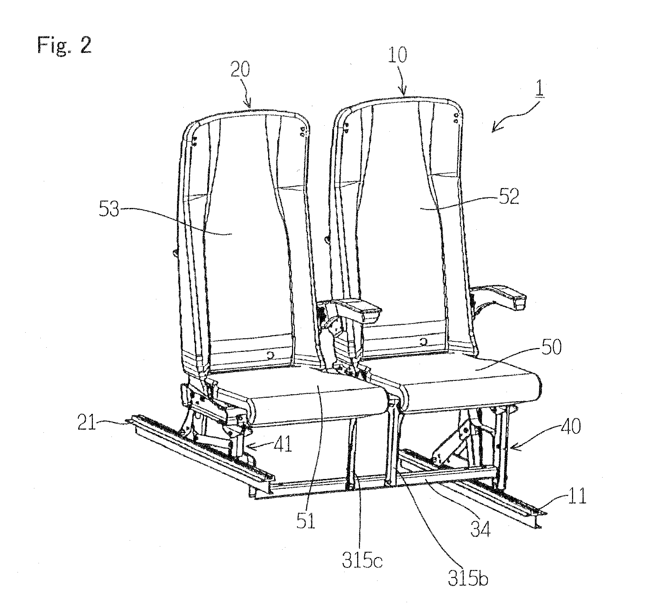

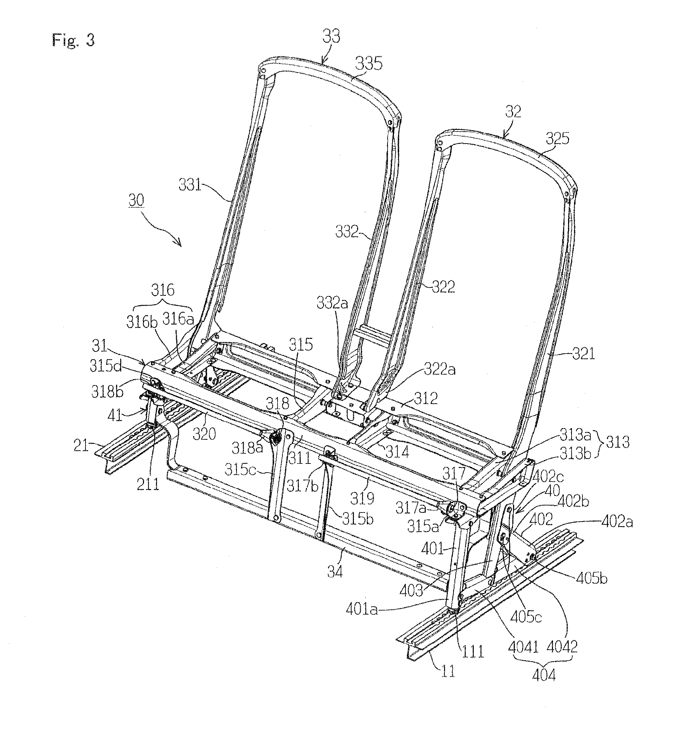

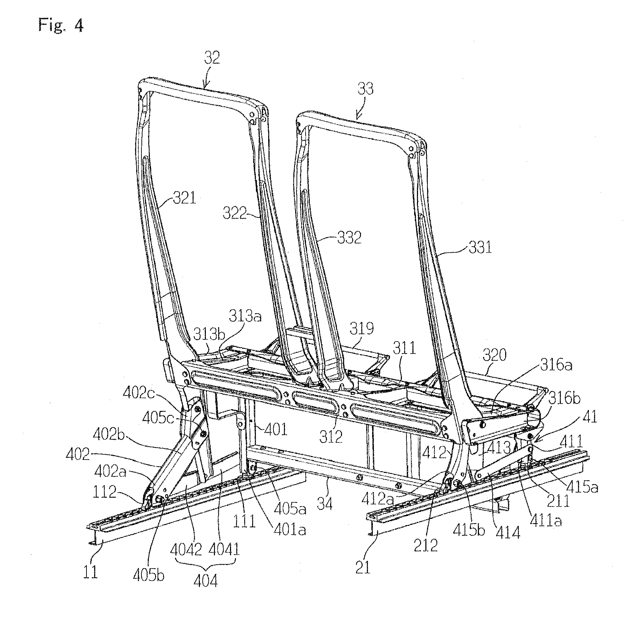

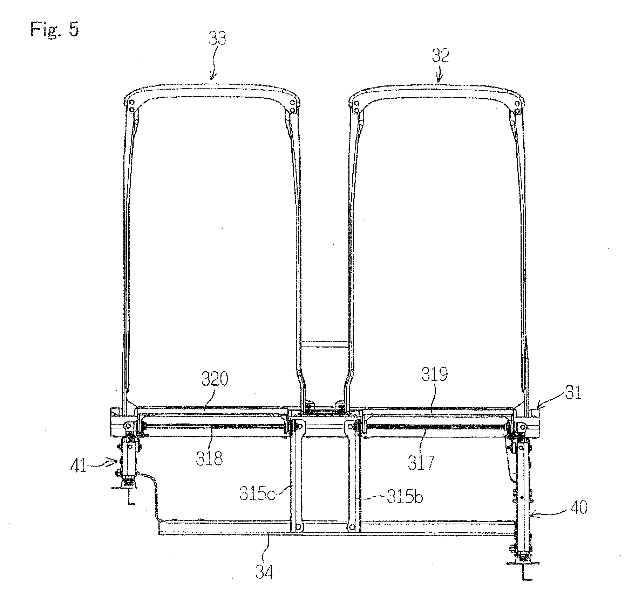

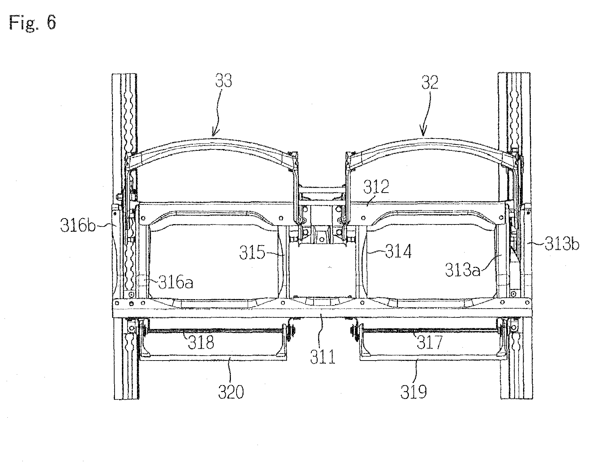

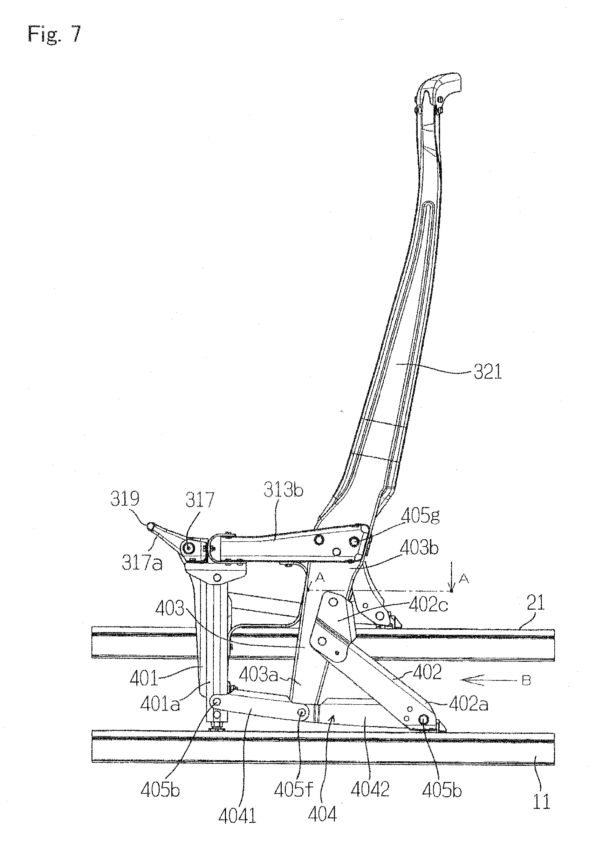

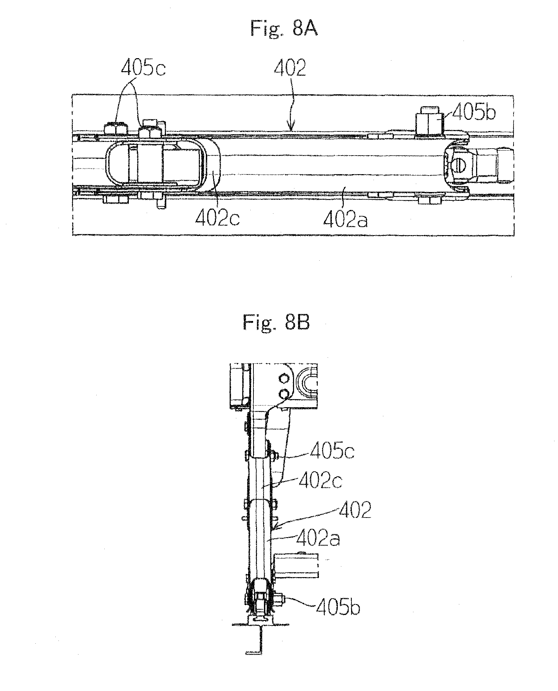

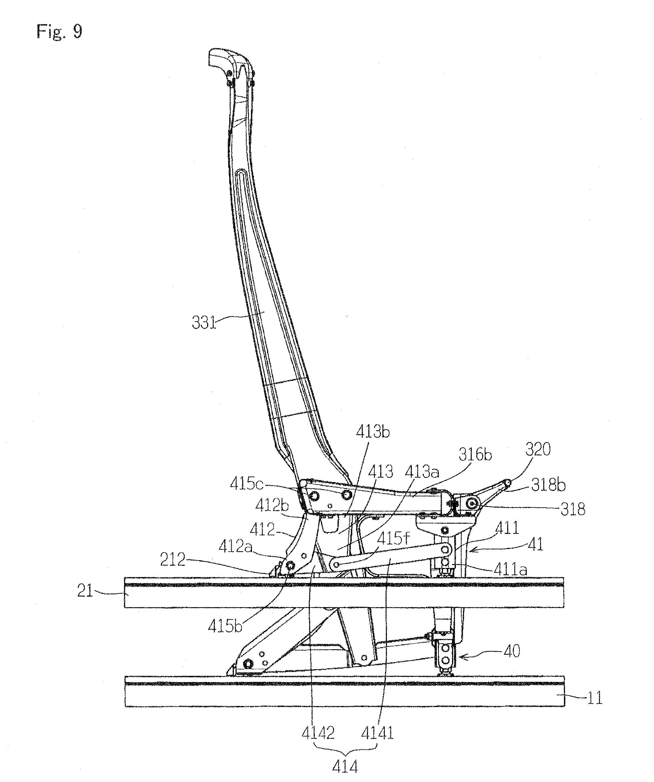

Figs. 1 and 2 are appearance perspective views illustrating a vehicle seat 1 according to an embodiment of the present invention, and Figs. 3 to 9 are views illustrating a mounting frame 30 composed of a cushion frame 31 and back frames 32 and 33 from which cushioning members are removed. This vehicle seat structure 1 is installed as a passenger seat in an aircraft and two adjacent seats (an aisle side seat 10 and a window side seat 20) are provided.

Mounting rails 11 and 21 are laid on a floor of an airframe on the aisle side and the window side, respectively. However, since the floor surface protrudes upward on the window side, the mounting rail 21 laid on the window side is located higher than the mounting rail 11 on the aisle side.

Leg structures 40 and 41 are provided on right and left sides (the window side and the aisle side) of the cushion frame 31 of the mounting frame 30, respectively. A front leg portion 401 and a rear leg portion 402 of the leg structure 40 on the aisle side are connected to the mounting rail 11 through a front-side fixing member 111 and a rear-side fixing member 112, respectively, and a front leg portion 411 and a rear leg portion 412 of the window-side leg structure 41 are connected to the mounting rail 21 through a front-side fixing member 211 and a rear-side fixing member 212, respectively.

The aisle-side leg structure 40 has the front leg portion 401, the rear leg portion 402, and an intermediate leg portion 403 as described above. The front leg portion 401 is formed of a substantially linear member with a predetermined length, and a lower end portion 401a is fixed by a bolt 405a to the front-side fixing member 111 connected to the mounting rail 11 and provided substantially perpendicularly.

The rear leg portion 402 is made of a substantially linear member and a lower end portion 402a is connected to the rear-side fixing member 112 supported by the mounting rail 11 by a bolt 405b. An upper end portion 402b is connected to the middle of the intermediate leg portion 403, which will be described later, together with a connecting plate 402c by a bolt 405c and arranged diagonally. The connecting position of the upper end portion 402b is a middle part of the intermediate leg portion 403 below the cushion frame 31 and preferably a position close to the center part in the height direction or somewhat higher than that.

A connecting frame 404 is provided substantially in parallel with the mounting rail 11 between the lower end portion 401a of the front leg portion 401 and the lower end portion 402a of the rear leg portion 402. The connecting frame 404 is made of two short frames, that is formed of a first connecting frame 4041 and a second connecting frame 4042 and is configured by having them abutted in the longitudinal direction and connecting opposing end portions in the longitudinal direction by a bolt 405f. Each of end portions on the opposite side of the first and second connecting frames 4041 and 4042 is, respectively, connected to the lower end portion 401a of the front leg portion 401 and the lower end portion 402a of the rear leg portion 402 by using the bolts 405b and 405b. The lower end portion 403a of the intermediate leg portion 403 is connected together with the opposing end portions in the longitudinal direction of the first and second connecting frames 4041 and 4042 by the bolt 405f. The upper end portion 403b of the intermediate leg portion 403 is connected to the rear edge side of the cushion frame 31 by a bolt 405g. Thus, the intermediate leg portion 403 is provided so that the upper end portion 403b is located somewhat on the rear side than the lower end portion 403a.

As the result of formation as above, the rear leg portion 402, the intermediate leg portion 403, and the second connecting frame 4042 form a truss, and the front leg portion 401, the intermediate leg portion 403, the first connecting frame 4041, and a side frame 313 of the cushion frame 30 form a square shape. As a result, the rear side of the intermediate leg portion 403 is a truss and difficult to be deformed, but the front side of the intermediate leg portion 403 has a square shape and is configured to be deformed relatively easily.

The intermediate leg portion 403 has a length which extends not only to the upper end portion 403b crossing the cushion frame 31 but also further above from the upper end 403b, and this extended portion becomes an outer side frame 321 constituting the aisle-side back frame 32.

On the other hand, the window-side leg structure 41 also has the configuration similar to the above-described aisle-side leg structure 40 in a point that it has the front leg portion 411, the rear leg portion 412, the intermediate leg portion 413, and the connecting frame 414. However, as described above, the mounting rail 21 laid on the window side is located higher than the mounting rail 11 on the aisle side, and thus, the lengths of the front leg portion 411, the rear leg portion 412, and the intermediate leg portion 413 are shorter than those of the leg structure 40 on the aisle side.

In the window-side leg structure 41, specifically, the lower end portion 411a of the front leg portion 411 is fixed by the bolt 415a through the front-side fixing member 211 supported by the mounting rail 21 and provided substantially perpendicularly.

In the rear leg portion 412, the lower end portion 412a is connected by the bolt 415b through the rear-side fixing member 212 supported by the mounting rail 21, and the upper end portion 412b is connected close to the upper end of the intermediate leg portion 413 and provided with inclination similarly to the rear leg portion 402 of the leg structure 40 on the aisle side. The upper end portion 413b of the intermediate leg portion 413 is connected to the rear edge side of the cushion frame 31 by the bolt 415c, but since the length of the rear leg portion 412 of the window-side leg structure 41 is shorter, the upper end portion 413b is connected not in the middle of the intermediate leg portion 413 but close to the upper end portion 413b of the intermediate leg portion 413 together with the cushion frame 31 by the bolt 415c. The intermediate leg portion 413 is extended above the upper end portion 413b crossing the cushion frame 31, and this extended portion becomes an outer side frame 331 constituting the back frame 33 for the window-side seat 20.

The connecting frame 414 is formed of first and second connecting frames 4141 and 4142 made of two short frames and configured by connecting opposing end portions in the longitudinal direction by a bolt 415f similarly to the above, and the lower end portion 413a of the intermediate leg portion 413 is connected together with the end portions of the first and second connecting frames 4141 and 4142 by the bolt 415f. As a result, in the window-side leg structure 41, too, a truss is formed by the rear leg portion 412, the intermediate leg portion 413, and the second connecting frame 4142, and a square shape is formed by the front leg portion 411, the intermediate leg portion 413, the first connecting frame 415f, and a side frame 316 so that the front side can be deformed relatively more easily than the rear side.

The cushion frame 31 has a front edge frame 311 and a rear edge frame 312 arranged with a predetermined interval in the front-and-rear direction. The front edge frame 311 and the rear edge frame 312 have the length across the two seats, that is, the aisle-side seat 10 and the window-side seat 20. The side frames 313 and 314 for the aisle-side seat 10 are extended on the aisle side between the front edge frame 311 and the rear edge frame 312 in the right-and-left direction with a predetermined interval from each other, and side frames 315 and 316 for the window-side seat 20 are extended on the window side in the right-and-left direction with a predetermined interval from each other. Among them, the side frames 313 and 316 arranged on the outside of the seats 10 and 20 are formed of inner frames 313a and 316a and outer frames 313b and 316b, and are extended between each of the inner frames 313a and 316a and the outer frames 313b and 316b sandwiching the upper end portions 403b and 413b of the intermediate leg portions 403 and 413 between them, respectively. As described above, the side frames 314 and 315 provided close to the adjacent seat in each of the seats 10 and 20, respectively, are extended between the front edge frame 311 and the rear edge frame 312 disposed substantially in parallel with a predetermined interval, and the side frames 313 and 316 extended on the outside of each of the seats 10 and 20 have the inner frames 313a and 316a and the outer frames 313b and 316b sandwiching the intermediate leg portions 403 and 413. Therefore, the cushion frame 31 has a highly rigid structure having high natural frequencies both in the right-and-left and front-and-rear directions.

The front edge frame 311, the rear edge frame 312, and each of the side frames 313 to 316 are also connected by using a bolt in this embodiment as illustrated in Fig. 3 and the like. Moreover, the upper end portions of the front leg portions 401 and 411 are also connected to the front edge frame 311 by using a bolt.

Here, the front edge frame 311 and the rear edge frame 312 preferably are members having different Young's modulus or particularly the front edge frame 311 preferably has Young's modulus lower than that of the rear edge frame 312. For example, the rear edge frame 312 can be formed of stainless and the front edge frame 311 of an aluminum material or the like. By setting Young's modulus of the front edge frame 311 lower, the front edge side of the cushion frame 31 can have a flexible structure and the rear edge side can have a rigid structure, the front edge frame 311 and the front leg portions 401, 411 and the like connected thereto can be easily deformed, and impact absorbing capacity can be improved.

The back frame 32 of the aisle-side seat 10 and the back frame 33 of the window-side seat 20 are provided with the outer side frames 321 and 331 and the inner side frames 322 and 332, respectively. The outer side frames 321 and 331 are composed of portions extended upward from the upper end portions of the intermediate leg portions 403 and 413 connected to the rear edge sidle of the cushion frame 31 (the side frames 313 and 316 connected to the rear edge frame 312). That is, the outer side frames 321 and 331 are composed of a member integral with the intermediate leg portions 403 and 413.

For the inner side frames 322 and 332, the lower end portions 322a and 332a are connected and fixed by a bolt to the rear edge frame 312 close to the inner side frames 314 and 315 of the cushion frame 31 in the aisle-side seat 10 and the window-side seat 20, respectively. Upper frames 325 and 335 are extended between the upper end portions of the outer side frame 321 and the inner side frame 322 of the aisle-side seat 10 and between the upper end portions of the outer side frame 331 and the inner side frame 332 of the window-side seat 20, respectively.

Moreover, the back frames 32 and 33 are covered by cushioning members 52 and 53 for back, respectively (See Figs. 1 and 2). A three-dimensional solid knitted fabric, a two-dimensional fabric, a material obtained by laminating a thin urethane material with the three-dimensional solid knitted fabric or two-dimensional fabric, a material obtained by laminating a plurality of them and the like can be used for the cushioning members 52 and 53 for back but the material preferably includes the three-dimensional solid knitted fabric which is excellent in vibration absorbing function even if the thickness is small. Moreover, the back frames 32 and 33 are preferably set such that the natural frequencies in the front-and-rear direction and the right-and-left direction are different from each other. The natural frequency in the front-and-rear direction is preferably set higher than the natural frequency in the right-and-left direction. As a result, if an impact larger than a predetermined level is received, the back frames 32 and 33 can be easily displaced in the front-and-rear direction and can alleviate a reaction force to the human bodies. That is, the spine of a human body can easily bend in the front-and-rear direction and be flexible but cannot easily bend in the right-and-left direction and be rigid. Therefore, by setting the rigidity of the back frame 32 and 33 high in the front-and-rear direction (by raising the natural frequency) and low in the right-and-left direction (by lowering the natural frequency), the skeleton of a human and the framework of the vehicle seat 1 (the back frames 32 and 33) are well-balanced, and impact absorbing properties and vibration absorbing properties of the vehicle seat 1 are improved.

Here, mounting brackets 315a to 315d are provided with predetermined intervals from each other on each of the aisle-side seat 10 and the window-side seat 20 on the front face of the front edge frame 311 of the cushion frame 31, and torsion bars 316 and 317 are disposed between the adjacent mounting brackets 315a and 315b and between 315c and 315d. Arm members 316a, 316b, 317a, and 317b are provided in the vicinity of each end portion of each of the torsion bars 316 and 317, and these arm members 316a, 316b, 317a, and 317b are supported so as to be located projecting diagonally upper front when no load is applied. Moreover, support frames 318 and 319 are extended between the adjacent arm members 316a and 316b and between 317a and 317b.

Cushioning members 50 and 51 for seat cushion are extended and supported between the support frames 318 and 319 and the rear edge frame 312, respectively (See Figs. 1 and 2). As a result, each of the cushioning members 50 and 51 is elastically supported by the torsion bars 316 and 317. The elasticity of the torsion bars 316 and 317 performs the vibration absorbing function and moreover, if a large impact is applied, the support frames 318 and 319 move rotationally in the both directions between diagonally upper and lower front, and thus, each of the cushioning members 50 and 51 and a human body sitting thereon are damped and the human body is guided diagonally downward in combination with a force diagonally lower front so as to reduce movement of a pelvis caused by a submarine phenomenon. Moreover, a force acts in a direction to push down the intermediate leg portions 403 and 413 of the leg mechanisms 40 and 41, and the skeleton can easily move. Moreover, the cushion frame 31 has a flexible structure in which the front edge frame 311 side has spring elasticity as compared with the rear edge frame 312 side by disposing the torsion bars 316 and 317. As a result, the front leg portions 401 and 411 receive the impact and are deformed forward and can also easily deflect inward. That is, the impact can be absorbed also by the right-and-left motion in addition to the vertical and front-and-rear motions. The three-dimensional solid knitted fabric and the like similar to the cushioning members 52 and 53 for back as above can be used for the cushioning members 50 and 51.

Moreover, the mounting brackets 315b and 315c arranged close to the center have predetermined length and are provided so as to extend downward from the front edge frame 311, and a middle part of a luggage bar 34 extended between the front leg portion 401 of the leg structure 40 on the aisle side and the front leg portion 411 of the leg structure 41 on the window side is connected by a bolt to the lower end portions of the mounting brackets 315b and 315c. The luggage bar 34 performs a function to prevent forward jumping out of a luggage placed under the seat.

According to this embodiment, if a large impact is applied from the front due to belly-landing or the like, since the human body is restricted by a seatbelt in the vicinity of the haunch portion, a large load is applied diagonally upper front and diagonally lower front around the belt anchor. Then, the support frames 318 and 319 supporting the cushioning members 50 and 51 for seat cushion rotationally move diagonally lower front around the torsion bars 316 and 317, seat surfaces of the cushioning members 50 and 51 are inclined diagonally forward. After the femoral area of the human body is moved in a direction to be brought into contact with the front edge frame 311, the support frames 318 and 319 move rotationally upward around the torsion bars 316 and 317 by the reaction force and suppress forward displacement of the human buttocks. These motions are transmitted to the leg structures 40 and 41, but in each of the leg structures 40 and 41, the leg portions are connected to each other by the bolts as described above. Therefore, if the force acting on the leg structures 40 and 41 is larger than the fastening force (friction force) by the bolts, the connection portions are displaced.

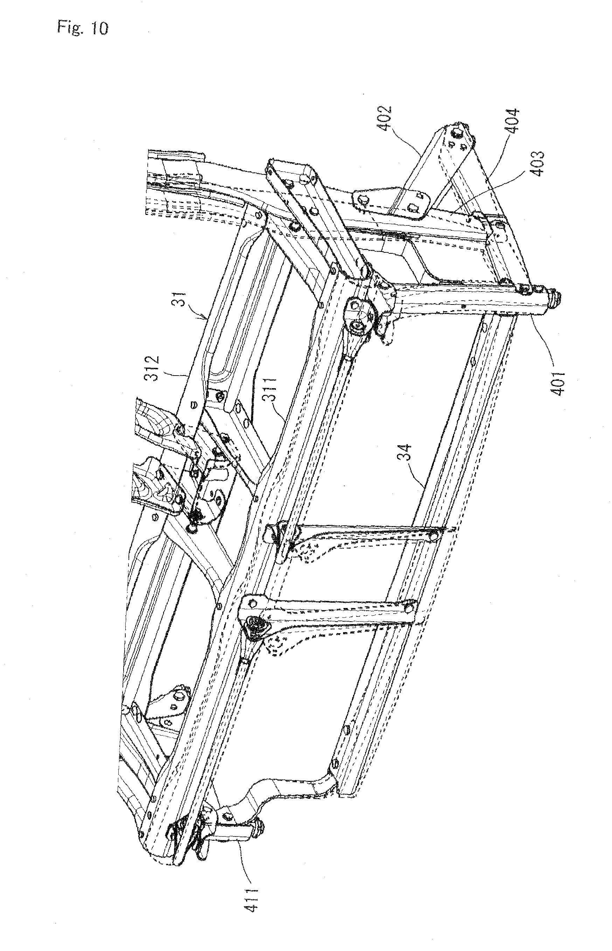

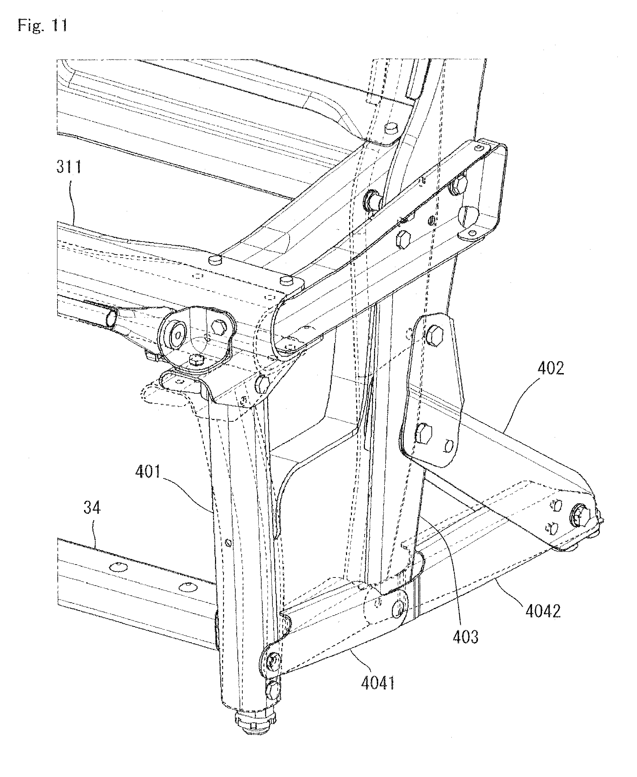

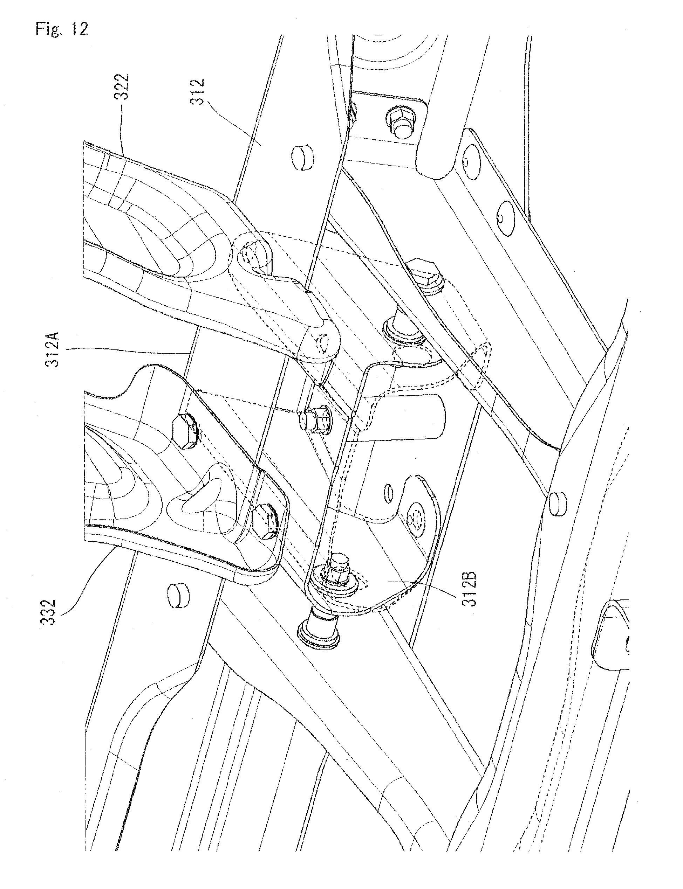

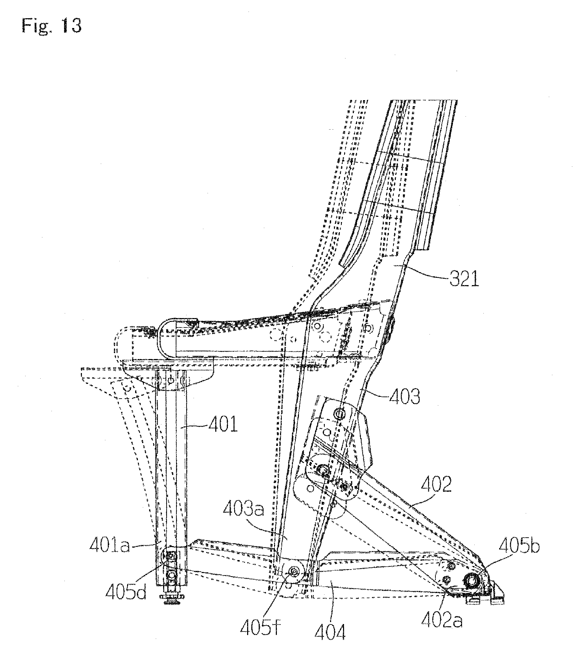

That is, the leg structures 40 and 41 of this embodiment are multi-joint structures and thus, impact energy is first dispersed by the friction force in this connection portion. Then, as illustrated by broken lines in Figs. 10 to 13, connection portions between the intermediate leg portions 403 and 413 and the connecting frames 404 and 414 are to displace downward by the force applied downward, and the rear leg portions 402 and 412 rotationally move diagonally lower front around the lower end portions 402a and 412a at the same time. Moreover, the front leg portions 401 and 411 rotationally move diagonally lower front around the lower end portions 401a and 411a. That is, since the connection portions between the intermediate leg portions 403 and 413 and the connecting frames 404 and 414 are displaceable downward, the entire leg structures 40 and 41 are displaced diagonally lower front around the lower end portions 402a and 412a of the rear leg portions 402 and 412. More specifically, as illustrated in Fig. 11, since the torsion bars 316 and 317 are provided and the front edge frame 411 side using the member with low Young's modulus has a flexible structure, the front leg portions 401 and 411 protrude more on the upper end portions and fall inward so as to bend inward. At the same time, the intermediate leg portions 403 and 413 are also displaced inward. Moreover, with these motions, a bracket 312B for reinforcement having a substantially U-shaped section provided on the lower side close to the center 312A of the rear edge frame 312 which supports the lower ends of the inner side frames 322 and 332 of the back frames 32 and 33 is also deformed so as to collapse from a state indicated by a solid line to a state indicated by a broken line as illustrated in Fig. 12, and a vertical motion also occurs in this portion. As a result, as compared with the prior-art structure in which the impact is absorbed only by forward displacement, not only the displacement diagonally lower front around the lower end portions 402a and 412a of the rear leg portions 402 and 412 but also the front-and-rear, vertical and moreover, right-and-left motions are generated, that is, the impact absorbing efficiency is improved by the configuration in which the couple of force is generated against the inputted impact force at a plurality of points in the connection portion. Moreover, the rear leg portions 402 and 412 are displaced downward and in the subsequent stage, the torsion bars 316 and 317 are reversed. That is, movement of the center of gravity of the human body is aided, a recovery force of the front edge frame 311, the front leg portions 401 and 411 and the like can act more easily and the impact energy is dispersed by the motion of each frame (framework) by means of reciprocal rotary motions of the torsion bars 316 and 317. Moreover, when the impact energy is applied, the human being can be easily guided rearward by the above-described reciprocal rotary motions of the torsion bars 316 and 317, and stability of the buttocks position can be improved. That is, the present invention provides a structure which increases a damping ratio by means of damping by using the elastic energy of each frame (framework) itself so as to absorb the impact energy and a structure which does not require special member for absorbing the impact energy so as to contribute to weight reduction of the frame (framework) in a point.

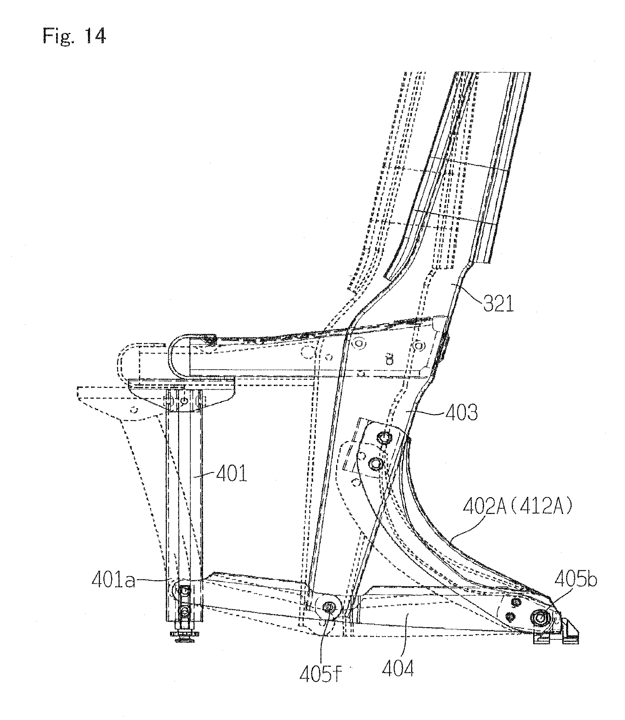

In the above-described embodiment, straight members are used for the rear leg portions 402 and 412, but rear leg portions 402A and 412A curved in the shape of a bow can be also used as illustrated in Fig. 14. In this case, too, if an impact larger than a predetermined level is applied, each of the leg structures 40 and 41, the cushion frame 31, and the back frames 32 and 33 is displaced similarly to the above-described embodiment as indicated by the broken line in Fig. 14, and high impact absorbing properties can be realized.

In the above-described embodiment, members are connected by bolts at the connection portions but they can be connected by caulking. Also, in the above-described embodiment, the torsion bars 316 and 317 are provided only on the front edge frame 311 side of the cushion frame 31 but it may be so configured that a torsion bar is also provided on the rear edge frame 312 side, the support frame is rotatably supported on this torsion bar by using an arm member, and the cushioning members 50 and 51 for seat cushion are extended between this rear edge side support frame and the above-described front side support frame.

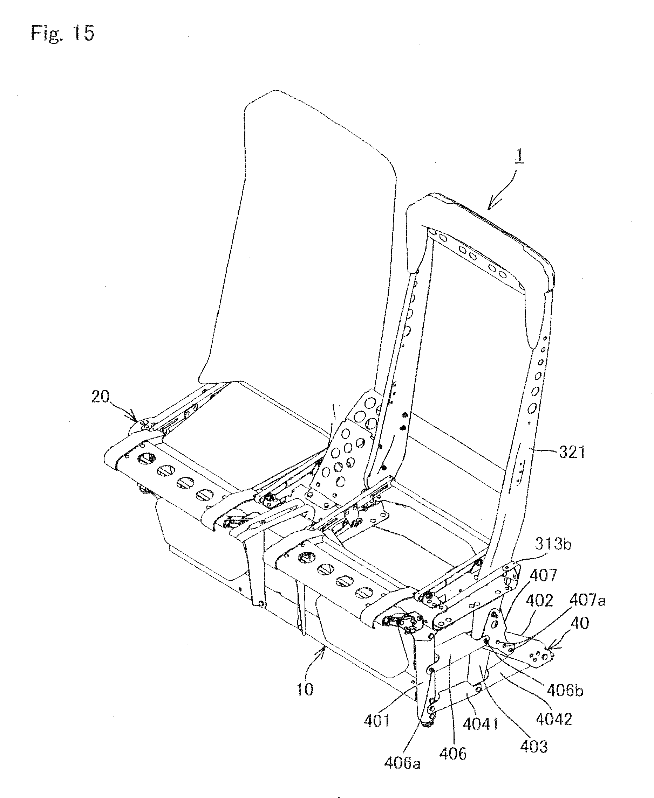

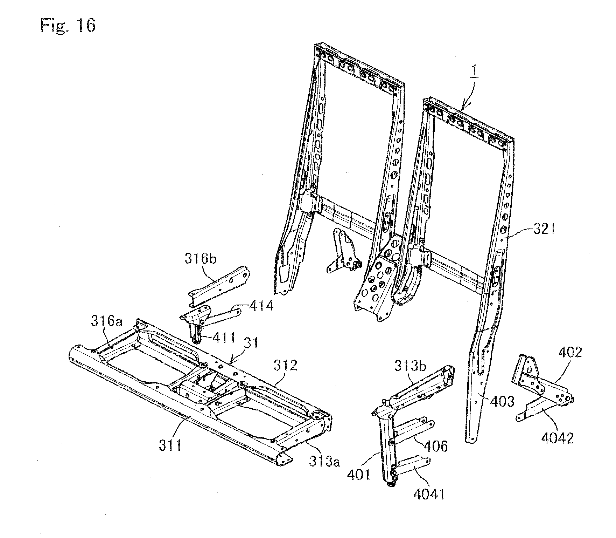

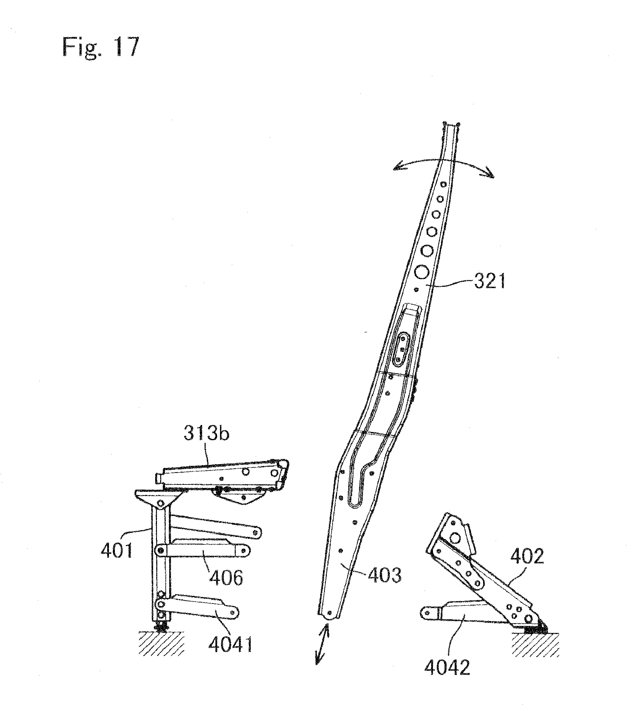

Figs. 15 to 18 are views illustrating the vehicle seat 1 according to another embodiment of the present invention. This embodiment is **characterized in that**, in the aisle side seat 10, a reinforcing frame 406 is extended between each of the middle parts of the front leg portion 401 and the intermediate leg portion 403 below the cushion frame 31. The reinforcing frame 406 is connected between the middle part of the front leg portion 401 and the middle part of the intermediate leg portion 403 by bolts 406a and 406b. As a result, the front leg portion 401, the intermediate leg portion 403, the reinforcing frame 406, and the first connecting frame 4041 form a square shape, and the rear side from the intermediate leg portion 403 forms a truss by the rear leg portion 402, the intermediate leg portion 403, and the second connecting frame 4042.

When compared with the above-described embodiment, formation of truss by the rear leg portion 402, the intermediate leg portion 403, and the second connecting frame 4042 is the same, but while the front leg portion 401, the intermediate leg portion 403, the first connecting frame 4041, and the side frame 313 of the cushion frame 30 form an outside large square shape in the above-described embodiment, in this embodiment in which the reinforcing frame 406 is arranged, a relatively small square shape is formed by the front leg portion 401, the intermediate leg portion 403, the reinforcing frame 406, and the first connecting frame 4041. That is, a part above the reinforcing frame 406 becomes a highly rigid portion by arranging the reinforcing frame 406 and moreover, since the square shape is smaller, the front side from the intermediate leg portion 403 is configured such that deformation is relatively more difficult to occur than the above-described embodiment. That is, this embodiment can bear vibration with high rigidity as compared with the above-described embodiment. Moreover, since the rigidity of the front side from the intermediate leg portion 403 is higher as above, a planar pressure applied to the rear leg portion 402 becomes higher. Thus, a reinforcing plate 407 is provided between the reinforcing frame 406 and the rear leg portion 402 and connected by a plurality of rivets 407a so as to raise the planar pressure. Moreover, a high planar pressure is also required for the connection portion with the rear-side fixing members 112 and 212 in the rear leg portion 402 and 412, but its detailed structure will be described later.

On the other hand, if an impact force larger than a predetermined level is applied, the front leg portion 401 located below the portion on which the reinforcing frame 406 is arranged deflects forward, and the connection portions between the intermediate leg portions 403 and 413 and the connecting frames 404 and 414 are displaced downward by the downward force caused by that and as a result, the impact is relaxed similarly to the above-described embodiment.

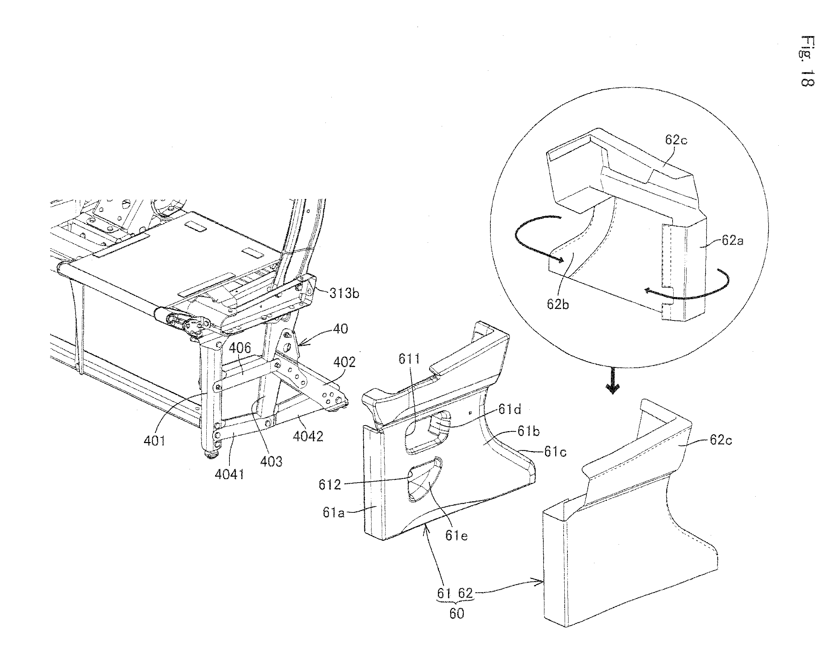

The leg portion 40 is preferably covered by the covering member 60 as illustrated in Fig. 18. This covering member 60 includes an inner buffer member 61 formed conforming to the shape of the leg portion 40 and an outer covering member 62 arranged outside the inner buffer member 61.

The inner buffer member 61 has a front covering portion 61a which covers the front face side of the front leg portion 401, an outer side face covering portion 61b which covers the front leg portion 401, the rear leg portion 402, the intermediate leg portion 403, the reinforcing frame 406, the side frame 313b, the first connecting frame 4041 and the second connecting frame 4142 from the outer faces, and a back side face covering portion 61c which covers the back face side of the rear leg portion 402. Moreover, an upper gap 611 surrounded by the front leg portion 401, the intermediate leg portion 403, the reinforcing frame 406, and the side frame 313b is formed, each of the peripheral edge portions of the upper gap 611 is folded inward, and an upper inner side face covering portion 61d which covers the inner side faces of the front leg portion 401, the intermediate leg portion 403, the reinforcing frame 406 and the side frame 313b is provided. Similarly, a lower gap 612 surrounded by the front leg portion 401, the intermediate leg portion 403, the reinforcing frame 406, and the first connecting frame 4142 is formed, each of the peripheral edge portions of the lower gap 612 is folded inward, and a lower inner side face covering portion 61e which covers the inner side faces of the front leg portion 401, the intermediate leg portion 403, the reinforcing frame 406, and the first connecting frame 4142 is provided.

The inner buffer member 61 is formed by molding a synthetic resin or the like so that the above-described shape is provided and is attached from the outer side face of the leg portion 40. The inner buffer member 61 is light weighted and has a predetermined elastic force and thus, it is preferably formed of a bead foaming body. The bead foaming body uses a foaming molding of a resin containing at least any one of polystyrene, polypropylene, and polyethylene by using a bead method. An expansion ratio is arbitrary and is not limited.

The outer covering member 62 is formed of fabric, a two-dimensional net material, a three-dimensional solid knitted fabric and the like so as to cover the front face covering portion 61a, the outer side face covering portion 61b, and the back face covering portion 61c of the inner buffer member 61. The outer covering member 62 has a front face folded portion 62a, a back face folded portion 62b, and an upper face folded portion 62c and they are folded inward so as to cover the peripheral edge portions of the inner buffer member 61, and fixed through a planar fastener (not shown).

The inner buffer member 61 suppresses movement of each connection portion of the front leg portion 401, the intermediate leg portion 403, the reinforcing frame 406, the side frame 313b, and the first connecting frame 4142 by providing the covering member 60 as above, increases the natural frequency of the leg portion 40 and contributes to further improvement of rigidity. On the other hand, if an impact is applied, the impact is damped by the elastic force of the inner buffer member 61 and then, engagement of the planar fastener of the outer covering member 62 is released and is to remove, whereby the impact force is damped. After that, the inner buffer member 61 further tries to escape to the outside, and the impact force is also damped by that force. After that, similarly to the above-described embodiment, a buffering force by the leg portion 40 and other frames acts. Therefore, the impact force absorbing properties can be further improved by providing the covering member 60.

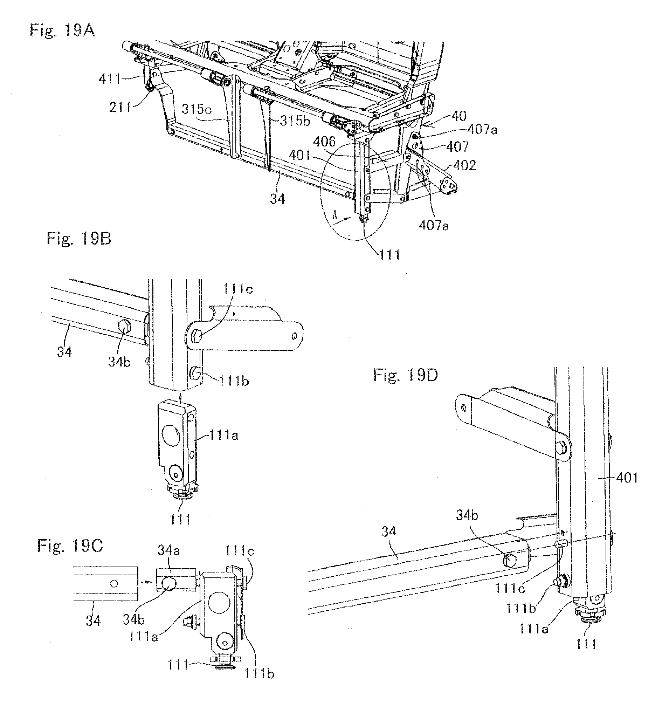

Moreover, the front-side fixing members 111 and 211 fixed to the mounting rails 11 and 21 and the front leg portions 401 and 411 are preferably fixed by the structure illustrated in Fig. 19. The leg portion 40 including the aisle-side front leg portion 401 and the front-side fixing member 111 are described in Fig. 19, but the relationship between the leg portion 41 including the window-side front leg portion 411 and the front-side fixing member 211 is the same.

That is, a first block 111a is fixed on an upper part of the front-side fixing member 111. The first block 111a has a width that can be inserted from a lower end opening of the front leg portion 411 and a height reaching the position of the luggage bar 34 when inverted. Moreover, a second block 34a is inserted from the opening end of one end portion of the luggage bar 34. The second block 34a is screwed by a bolt 34b from the outer face of the luggage bar 34. The first block 111a is fixed and connected from the outer side face of the front leg portion 401 by two bolts 111b and 111c penetrating to the opposite face side. At this time, the bolt 111c arranged on the upper side penetrates the first block 111a and then, is further screwed into the second block 34a from the end face of the second block 34a and fastened.

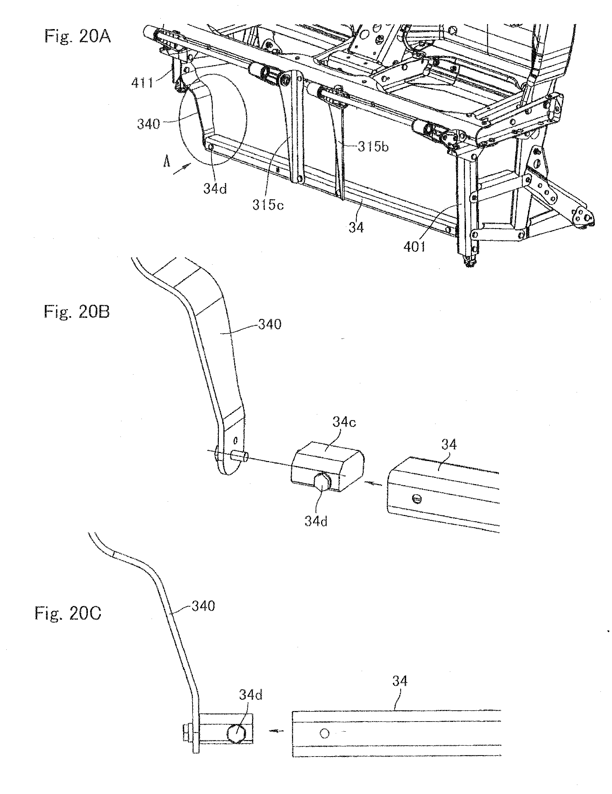

Moreover, a third block 34c is inserted also into the other end portion of the luggage bar 34 as illustrated in Fig. 20. This third block 34c is screwed by a bolt 34d from the outer face of the luggage bar 34. On the other hand, the other end of a connecting frame 340 whose one end is connected to the window-side front leg portion 411 is connected to the end face of the third block 34c by the bolt 34d.

As described above, the luggage bar 34 is integrated with the aisle-side front leg portion 401 through the first block 111a and the second block 34a, and the window-side front leg portion 411 and the luggage bar 34 are integrated through the third block 34c. Therefore, even if the front leg portion 401, the luggage bar 34 and the like are formed of aluminum and the like for weight reduction, the structure can have high strength by actions of the first block 111a, the second block 34a, and the third block 34c. Moreover, the luggage bar 34 performs not only the function of preventing jumping out of a luggage but also a function of one of strength members in the mounting frame 30. Therefore, if a load is applied to the seat belt by an impact, the force is transmitted to the luggage bar 34 through the two mounting brackets 315b and 315c extended between the vicinity of the center in the width direction of the front edge frame 311 and the vicinity of the center of the luggage bar 34, in this embodiment, since the luggage bar 34 itself functions as a strength member, this force is reliably transmitted and can be received by being transmitted to the front-side fixing members 111 and 211 through the front leg portions 401 and 411.

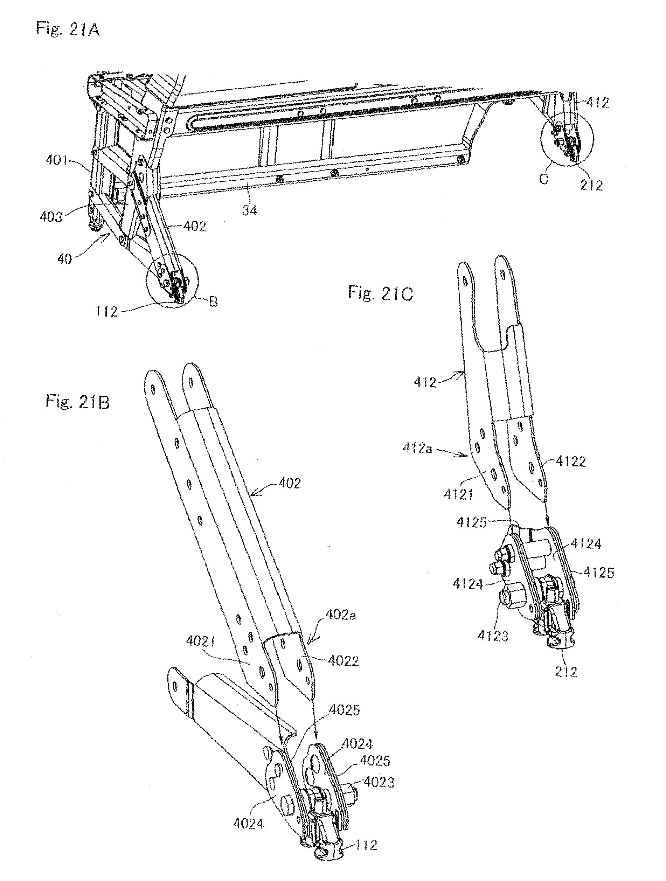

The rear leg portions 402 and 412 are preferably fixed to the rear-side fixing members 112 and 212 fixed to the mounting rails 11 and 21 by the structure illustrated in Fig. 21. Each of the lower end portions 402a and 412a of the rear leg portions 402 and 412 has two right and left plate-shaped portions 4021, 4022, 4121, and 4122. The rear leg portions 402 and 412 are preferably formed of aluminum and the like for weight reduction, but in this embodiment, the reinforcing frame 406 is provided and the luggage bar 34 is connected through each block as described above for improving rigidity. Thus, if the plate-shaped portions 4021, 4022, 4121, and 4122 are directly fixed by bolts 4023 and 4123, a planar pressure is not sufficient, and there is a concern in strength. Thus, each of the plate-shaped portions 4021, 4022, 4121, and 4122 is sandwiched by two reinforcing plates 4024, 4025, 4124, and 4125 and fixed to the rear-side fixing members 112 and 212 by bolts 4023 and 4123.

As a result, the lower end portions 402a and 412a of the rear leg portions 402 and 412 are firmly fixed to the rear-side fixing members 112 and 212. As a result, if deformation is to occur in the square-shaped structure on the front side from the intermediate leg portion 403 due to the impact as described above, since the rear side has a truss shape, deformation is difficult to occur, but a large force is applied in a direction of separating the rear leg portions 402 and 412 from the rear-side fixing members 112 and 212. At this time, according to this embodiment, since each of the plate-shaped portions 4021, 4022, 4121, and 4122 is sandwiched by the two reinforcing plates 4024, 4025, 4124, and 4125, the strength is high, and a bearing force when a withdrawal load is generated by an impact is raised.

In this embodiment, the reinforcing frame 406 is provided substantially horizontally, but that is not limiting, and the reinforcing frame can be provided diagonally so that the front leg portion 401 side becomes higher or to the contrary, the intermediate leg portion 403 becomes higher, and the angle can be arbitrarily set. As a result, since a square formed by the front leg portion 401, the intermediate leg portion 403, the reinforcing frame 406, and the first connecting frame 4041 might become from a state close to a rectangle to a state close to a diamond, and rigidity can be adjusted. That is, according to this embodiment, since the reinforcing frame 406 is provided, rigidity can be adjusted by adjusting the mounting angle or adjusting the material or section modulus of the reinforcing frame 406, and the natural frequency of the framework can be arbitrarily set, which is an advantage.

Moreover, since the structure according to the embodiment illustrated in Figs. 1 to 14 does not have the reinforcing frame 406, the front side from the intermediate leg portion 403 can be deformed by an impact more easily than the structure according to the embodiment illustrated in Figs. 15 to 21, but since the structure illustrated in Figs. 15 to 21 has the reinforcing frame 406, the front side is more difficult to be deformed than that in Figs. 1 to 14. They are preferably selected in accordance with the rigidity of a vehicle such as an airframe such that the vehicle seat having a relatively flexible structure illustrated in Figs. 1 to 14 is used if the body rigidity is high, while the vehicle seat having a relatively rigid structure illustrated in Figs. 15 to 18 is used if the body rigidity is low.

### Reference Sings List

- 1: vehicle seat
- 10: aisle-side seat
- 20: window-side seat
- 30: mounting frame
- 31: cushion frame
- 311: front edge frame
- 312: rear edge frame
- 32, 33: back frame
- 40: leg structure (aisle side)
- 401: front leg portion
- 402: rear leg portion
- 403: intermediate leg portion
- 404: connecting frame
- 4041, 4042: short frame
- 41: leg structure (aisle side)
- 411: front leg portion
- 412: rear leg portion
- 413: intermediate leg portion
- 414: connecting frame
- 4141, 4142: short frame
- 60: covering member
- 61: inner buffer member
- 62: outer covering member

## Claims

1. A vehicle seat comprising:
a cushion frame and leg structures provided on right and left of said cushion frame, in which said leg structures are mounted on a mounting rail laid with a predetermined interval on a floor of a body of a vehicle, and **characterized in that**;
at least one of said leg structures has:
a front leg portion connected at a predetermined position of said mounting rail through a front-side fixing member;
a rear leg portion provided with a predetermined interval from said front leg portion and connected to said mounting rail through a rear-side fixing member; and
an intermediate leg portion provided between said front leg portion and the rear leg portion;
said rear leg portion is diagonally connected between said rear-side fixing member and said intermediate leg portion so that an end portion on said intermediate leg portion side is located above an end portion on said rear-side fixing member side; and
lower end portions of said front leg portion and said intermediate leg portion, and lower end portions of said rear leg portion and said intermediate leg portion, are connected by first and second connecting frames, respectively.

2. The vehicle seat according to claim 1, wherein
said front leg portion is provided on a front edge side of said cushion frame so as to extend in a substantially perpendicular direction from said floor surface;
said front leg portion, said intermediate leg portion, said cushion frame, and said first connecting frame are provided so as to form a square shape, and said rear leg portion, said intermediate leg portion, and said second connecting frame form a truss.

3. The vehicle seat according to claim 1, wherein
said front leg portion is provided on a front edge side of said cushion frame so as to extend in the substantially perpendicular direction from said floor surface, and a reinforcing frame is extended between middle parts of said front leg portion and said intermediate leg portion located below said cushion frame;
said front leg portion, said intermediate leg portion, the reinforcing frame, and said first connecting frame are provided to form a square shape, and said rear leg portion, said intermediate leg portion, and said second connecting frame form a truss.

4. The vehicle seat according to any one of claims 1 to 3, wherein
said front leg portion is provided on the front edge side of said cushion frame so as to extend in the substantially perpendicular direction from said floor surface, and said intermediate leg portion is provided diagonally between a rear edge side of said cushion frame and said first and second connecting frames so that an upper end portion is located on the rear side more than a lower end portion.

5. The vehicle seat according to any one of claims 1 to 4, wherein
said front leg portion and the front-side fixing member, said rear leg portion and said rear-side fixing member, said intermediate leg portion and said rear leg portion, said intermediate leg portion and said first and second connecting frames, said first connecting frame and said front leg portion, and said second connecting frame and said rear leg portion are connected to each other by bolts or caulking, respectively.

6. The vehicle seat according to any one of claims 1 to 5, wherein
the intermediate leg portion constituting said leg structure extends to above a connection point with the cushion frame and the portion extending upward is a side frame of a back frame.

7. The vehicle seat according to any one of claims 1 to 6, wherein
said cushion frame includes:
a front edge frame and a rear edge frame front edge frame provided in a front-and-rear direction with a predetermined interval and having lengths which can set a plurality of adjacent seats; and
a side frame extended between said front edge frame and said rear edge frame and composed of a side frame provided closer to the adjacent seat in each seat and a side frame formed of an inner frame arranged inside said intermediate leg portion and an outer frame arranged outside sandwiching said intermediate leg portion of said leg structure between them.

8. The vehicle seat according to any one of claims 1 to 7, wherein
the connection point between said cushion frame and said leg structure is connected by bolts or caulking.

9. The vehicle seat according to claim 8, wherein
the front edge frame of said cushion frame and the front leg portion of said leg structure and the rear edge frame of said cushion frame and the intermediate leg portion of said leg structure are connected by bolts or caulking, respectively.

10. The vehicle seat according to any one of claims 1 to 9, wherein
a torsion bar arranged in a right-and-left direction is provided on the front edge side of said cushion frame, a pair of arm members protruding in a direction substantially orthogonal to this torsion bar are provided with a predetermined interval from each other, and a support frame is extended between the arm members.

11. The vehicle seat according to any one of claims 1 to 10, wherein
members with different Young's modulus are used for the front edge frame and the rear edge frame of said cushion frame.

12. The vehicle seat according to claim 11, wherein
the member with Young's modulus higher than that of said front edge frame is used for said rear edge frame.

13. The vehicle seat according to any one of claims 1 to 12, wherein
said back frame has a natural frequency in the front-and-rear direction higher than the natural frequency in the right-and-left direction.

14. The vehicle seat according to any one of claims 1 to 13, further comprising:
a covering member having an inner buffer member covering at least a front face side of the front leg portion constituting said front leg portion, outer side faces of the front leg portion, the intermediate leg portion, and the rear leg portion, and a back face side of the rear leg portion; and
an outer covering member covering said inner buffer member and fixed.

15. The vehicle seat according to any one of claims 1 to 14, wherein
the vehicle seat is used as a seat for a passenger of the vehicle.
